# EUROPEAN PATENT SPECIFICATION

(11) **EP 1 812 452 B1**
(45) Date of publication and mention of the grant of the patent: **22.07.2009**
(21) Application number: 05792971.3
(22) Date of filing: 28.09.2005
(51) Int. Cl.: C07F 9/6581

(54) **THERMOSENSITIVE AND BIOCOMPATIBLE AMPHIPHILIC CYCLIC PHOSPHAZENE TRIMER AND PREPARATION METHOD THEREOF**
TEMPERATUREMPFINDLICHES UND BIOLOGISCH KOMPATIBLES AMPHIPHILES CYCLISCHES PHOSPHAZENTRIMER UND VERFAHREN ZU DESSEN HERSTELLUNG
TRIMERE DE PHOSPHAZENE CYCLIQUE, AMPHIPHILE, BIOCOMPATIBLE ET THERMOSENSIBLE ET SON PROCEDE DE PREPARATION

(30) Priority: 19.10.2004 KR 20040083742
(43) Date of publication of application: 01.08.2007
(73) Proprietor: Nanohaibride Co., Ltd, Daehyeon-Dong, Seodaemun-Gu Seoul (KR)
(72) Inventor: SOHN, Youn-Soo, Hyundai Apt. 93-1003, Seoul 135-110 (KR); KIM, Hae-Jin, Tangjeong-myeon, Asan-si Chungcheongnam-do (KR); KIM, Jin-Kyu, Kunyoung Apt. 102-1806, Seoul 156-718 (KR); KIM, Hye-Young, Seoul 134-809 (KR); JUN, Yong-Joo, Hanyang Apt. 101-1007, Seoul 142-060 (KR); TOTI, Udaya, Nano Science Div, Ewha Womans Univ., Seoul 120-750 (KR)
(74) Representative: Daniels, Jeffrey Nicholas
(86) International application number: PCT/KR2005/003217
(87) International publication number: WO 2006/043757

(56) References cited:
- KIM, JIN KYU ET AL: "A macromolecular prodrug of doxorubicin conjugated to a biodegradable cyclotriphosphazene bearing a tetrapeptide" BIOORGANIC & MEDICINAL CHEMISTRY LETTERS , 15(15), 3576-3579 CODEN: BMCLE8; ISSN: 0960-894X, 27 June 2005 (2005-06-27), XP004969897
- TOTI ET AL: "III22P7: Synthesis and Properties of Thermosensitive Cyclotriphosphazenes Bearing Oligopeptides" ABSTRACT OF THE 93RD NATIONAL MEETING OF KOREA CHEMICAL SOCIETY, 22 April 2004 (2004-04-22), - 23 April 2004 (2004-04-23) page 180, XP008083864
- Abstract of The 93rd National Meeting of Korea Chemical Society, pp.180 (22 APRIL 2004)
- SONG S.-C. ET AL: 'Synthesis and antitumor activity of novel thermosensitive platinum(II)-cyclotriphosphazene conjugates' JOURNAL OF CONTROLLED RELEASE vol. 90, no. 3, 2003, pages 303 - 311, XP004440537
- AMBROSIO A.M.A. ET AL: 'Degradable polyphosphazene/poly(alpha-hydroxyester) blends: degradation studies' BIOMATERIALS vol. 23, no. 7, 01 April 2002, pages 1667 - 1672, XP004335640
- SOHN Y.-S. ET AL: 'Synthesis and Properties of low molecular weight polyphosphazenes' MACROMOLECULES vol. 28, no. 22, 23 October 1995, pages 7566 - 7568, XP003018458

## Description

### TECHNICAL FIELD

The present invention relates to a thermosensitive and biocompatible amphiphilic cyclic phosphazene trimer and a preparation method thereof.

### BACKGROUND ART

A recently published article in *Science* magazine (Radoslav Savic, et al. Science 300, 615-618 (2003)) reported that selective drug delivery to the specific sites of the body using micelles can afford to alleviate effectively the toxicity problem of the drugs. In order to overcome the shortcoming of instability of the conventional surfactant based micelles, new types of micelles having in vivo stability, high capacity of drug encapsulation, and tolerant to chemical modifications have been developed as new drug delivery systems. In particular, a variety of micelles using block copolymers composed of both hydrophilic and hydrophobic blocks have been intensively studied. Such amphiphilic block copolymers have advantages in that they can form micelles in aqueous solution, in which the hydrophobic polymer blocks are subjected to intermolecular hydrophobic interactions to form the inner spatial core of the micelles capable of entrapping hydrophobic drug molecules, and its outer part (corona) is surrounded by hydrophilic groups, thereby making the micelles hydrophilic, and accordingly, they can effectively deliver hydrophobic drugs into the body.

Typically, a micelle is prepared from a diblock or triblock copolymer, in which a hydrophilic block and a hydrophobic block are alternately copolymerized. Poly(ethylene glycol) (PEG) has been most commonly used as a hydrophilic block polymer, and various hydrophobic organic acid polymers such as polylactic acid, polyaspartic acid, etc. have been used as hydrophobic block polymers (V. P. Torchilin, J. Control. Release, 73, 137-172 (2001)).

Even though the block copolymers having a backbone of such hydrophobic organic acid polymers are biodegradable, organic acids are formed during biodegradation, which may cause denaturation of the drug, and therefore, they cannot be used for delivering acid-sensitive biodrugs such as peptide and protein drugs. Moreover, such conventional block polymers generally have a simple molecular structure, and thus, serious changes in their physico-chemical properties are accompanied when a new functional group such as a target-directing agent is introduced or when their molecular structure is even slightly modified. Therefore, such conventional block polymers are faced with many limitations in designing required properties. Furthermore, most micelles that are formed from such block copolymers do not generally exhibit thermosensitivity near body temperature.

In general, the basic requirements for a drug delivery system include solubilization of hardly soluble drugs, controlled drug release, enhanced drug stability in vivo, efficient drug delivery to the target sites, and minimum side effects of the drug, in addition to biocompatibility of the drug delivery system itself. However, most of the conventional organic polymers used as a drug delivery system generally lack of biodegradability and have inherent limitation in designing properties, as above-mentioned. Some biodegradable polymers such as polylactic acid become acidic during biodegradation, which makes them unsuitable for delivery of biodrugs such as protein drugs, peptide drugs and the like. In other words, the conventional organic polymers can hardly satisfy the above-mentioned requirements at the same time, and therefore, development of new drug delivery systems is highly desired.

The present inventors have previously reported thermosensitive phosphazene trimers substituted with a poly(ethylene glycol) (PEG) as a hydrophilic group and an amino acid as a hydrophobic group (Youn Soo Sohn et al., J. Am. Chem. Soc, 2000, 122, 8315). Even though these trimers using an amino acid as a hydrophobic group are thermosensitive, micelles were not formed due to their low hydrophobicity. Furthermore, they are unstable in aqueous solution because the terminal carboxylate group of the amino acid substituent are located close to the phosphazene backbone.

Toti et al have disclosed thermosensitive cyclotriphosphazene-oligopeptide conjugates synthesized by introducing a variety of hydrophobic oligopeptides along with various hydrophilic methoxy poly(ethylene glycols) as a solubilising group (Abstract of the 93rd National Meeting of more a chemical Society, 22 April 2004-23 April (2004), p180)

### SUMMARY OF THE INVENTION

Therefore, an object of the present invention Is to provide a thermosensitive and biocompatible cyclic phosphazene trimer, in which a poly(ethylene glycol) as a hydrophilic group and an oligopeptide ester that is more hydrophobic than amino acid but enzymatically degradable as a hydrophobic group are introduced, producing thermosensitve micelles in aqueous solution with a phase transition temperature suitable for a drug delivery system, and to provide a preparation method thereof.

The aforementioned and other objects of the present invention will become more apparent from the following detailed description of the invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description to explain the principles of the invention.

In the drawings:
Figure 1 illustrates particle size distribution of the micelles formed from the cyclic phosphazene trimer prepared in Example 2;
Figure 2 illustrates particle size distribution of the micelles formed from the cyclic phosphazene trimer prepared in Example 2 and taxol;
Figure 3 shows the results of in vitro drug releasing experiments for the cyclic phososphazene trimer prepared in Example 2; and
Figure 4 is a chromatogram (RP-HPLC) showing drug stability resulting from mixing the cyclic phosphazene trimer prepared in Example 2 and a protein drug (hGH).

### DETAILED DESCRIPTION OF THE INVENTION

The present inventors have discovered that the above-mentioned objects can be achieved by introduction of FDA-approved poly(ethylene glycols) having a molecular weight of 100 or more as a hydrophilic group and oligopeptide esters having broader and stronger hydrophobicity than amino acids as a hydrophobic group into the cyclic phosphazene trimer, producing thermosensitive organic/inorganic hybrid phosphazene trimers which can form micelles having a size of 10-100 nm in an aqueous solution and form precipitate of nano- or micro-sized particles at around body temperature (31-42°C).

In more detail, the present inventors have developed an ideal new drug delivery material which can be used as a drug delivery system for hardly soluble drugs such as protein- or peptide-based drugs and antitumor agent Taxol, by stepwise nucleophilic substitutions of the chlorine atoms of hexachlorocyclotriphosphazene, (N=PCl₂)₃, with poly(ethylene glycols) as a hydrophilic substituent and oligopeptide esters as a hydrophobic (lipophilic) substituents so as to render amphiphilicity to the resultant cyclic phosphazene trimers, which have been found to form micelles exhibiting thermosensitivity in a wide range of temperature including body temperature.

Accordingly, the present invention relates to a cyclic phosphazene trimer represented by the following Formula 1, which has amphiphilic properties of hydrophilicity and hydrophobicity, thereby forming thermosensitive micelles in an aqueous solution, and to a preparation method thereof.

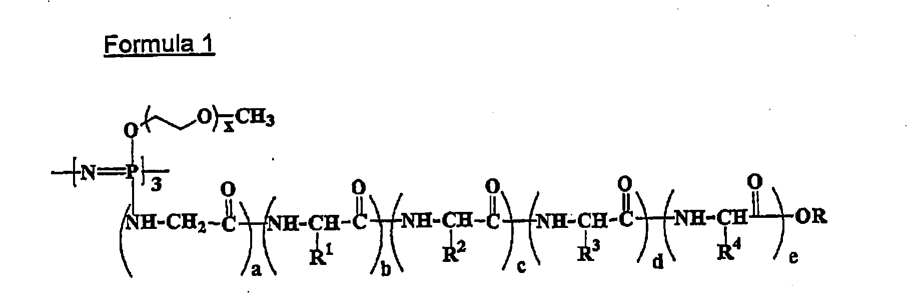

In Formula 1, x is the number of repeating unit of the poly(ethylene glycol) and is selected from the Integers of 3, 4, 7, 12 and 16; R is methyl, ethyl or benzyl group; R¹ is selected from the group consisting of CH₂CH(CH₃)₂, CH₂C₆H₅, CH(CH₃)CH₂CH₃ and CH₃; R² is selected from the group consisting of CH₂COOR, CH₂CH₂COOR, CH₂CH(CH₃)₂ and CH(CH₃)CH₂CH₃; R³ and R⁴ are independently selected from the group consisting of CH₂COOR, CH₂CH₂COOR and H, wherein said R is the same as defined above; a, b, c and d are equal to 1, respectively (i.e., a=b=c=d=1); and e is 0 or 1.

The cyclic phosphazene trimer of Formula 1 according to the present invention is an amphiphilic oligomer containing both hydrophobic (lipophilic) and hydrophilic side groups. According to the present invention, "thermosensitivity" means that below a certain temperature, the hydrophobic groups (oligopeptide esters) of the cyclic phosphazene trimer are subject to strong Intermolecular Interactions to orient toward the core while the hydrophilic groups (PEG) of the trimer surround the core to form a micelle, and thus, the outer hydrophilic groups form hydrogen bonding with the solvent water molecules so as to make the micelles soluble in water, but above a certain temperature, the hydrogen bonding between water molecules and the hydrophilic groups of the trimer are critically weakened, resulting in a considerable reduction of solubility so as to make the micelles aggregated to precipitate (i.e., microspheres or nanospheres). The temperature at which such phase transition occurs is called "lower critical solution temperature (LCST)." The micelles formed by self-assembly of the amphiphilic phosphazene trimers according to the present invention are nano particles ranging from 10 to a few hundred nanometers in size. Because the interior of the micelle core consists of lipophilic oligopepetide groups, hydrophobic drugs with low water-solubility can be efficiently entrapped within the core of the micelle, and thus, the present micellar phosphazene trimers are practically applicable to the drug delivery of hardly water-soluble drugs such as proteins or Taxol.

Furthermore, even though the cyclic phosphazene trimer of the present invention is an oligomer, it is monodisperse with a definite molecular weight. In addition, as can be seen from Formula 1, a phosphorus atom and a nitrogen atom are connected by alternate conjugated bonds to form a hexagonal ring plane, and the cyclic phosphazene trimer was designed to have a cis-nongeminal conformation such that three hydrophilic PEGs were oriented in the same direction with respect to the ring plane with the three hydrophobic oligopeptide esters in the opposite direction, and thus, the hydrophilicity and hydrophobicity of the molecule were maximized. Therefore, compared to the conventional block copolymers, stable micelles can be formed in an aqueous solution, and these micelles exhibit thermosensitivity at around the body temperature. Accordingly, they are suitable to be used as a drug delivery system for various drugs via subcutaneous injections or a local delivery to biological tissues. For example, when a protein drug such as a growth hormone is uniformly dissolved in an aqueous solution of the cyclic phosphazene trimer of the present invention having a lower critical solution temperature below body temperature and the solution temperature is elevated to 37°C, the micelles of the phosphazene trimer precipitate with most of the dissolved protein drug entrapped in the core. Therefore, when the drug solution prepared by such method is administered via subcutaneous injections, it is precipitated locally in the administered site and then slowly released therein without being spread in the entire blood stream of the body. Thus, the bioavailability of drug in the body can be maximized and the side effects of the drug can be minimized.

Furthermore, according to the animal tolerance test for the phosphazene trimer of the present invention, their superiority in biocompatibility has been proved. This is probably because the phosphazene backbone is converted into ammonium phosphate harmless to human when it is degraded in the body (Kathryn E. Uhrich, Chem. Rev., 1999, 99, 3198); the side group, poly(ethylene glycols) with a molecular weight of 100 or more were already approved by FDA to be safe; and the amino acids degraded from the oligopeptides are among the essential components found in the body.

In addition, the oligopeptide esters grafted to the phosphazene trimers of the present invention are advantageous in that they can be designed to have various desired properties without causing significant changes in their hydrophilicity or lipophilicity, and that they can be functionalized by hydrolysis and then be directly conjugated with any targeting agents or drugs, so that they can be used as a conjugate type drug delivery system.

Hereinafter, a preparation method of the cyclic phosphazene trimer represented by Formula 1 of the present invention will be described. Although the final product of Formula 1 is stable in the air, all the intermediates are very unstable in the air. Therefore, it is necessary to use thoroughly-dried reactants and solvents and to perform all the preparation procedures under argon atmosphere so as to avoid even a trace of moisture.

In the first step, a methoxy poly(ethylene glycol) (MPEG) represented by Formula 2 is vacuum dried and then is dissolved in thoroughly-dried tetrahydrofuran (THF) in a reaction flask, to which 1.0 to 1.1 equivalents of sodium (Na) or sodium hydride (NaH) is added, and then the reaction mixture in the flask is stirred in an oil bath at 70°C for 10 to 24 hours, to obtain the sodium salt of poly(ethylene glycol) represented by Formula 3.

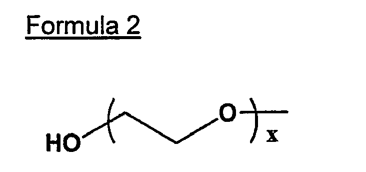

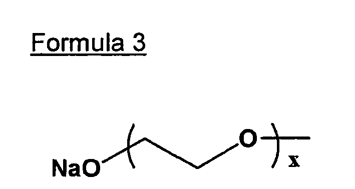

In Formulae 2 and 3, x is the same as defined in Formula 1.

In the second step, dried hexachlorocyclotriphosphazene represented by Formula 4 is dissolved in dried tetrahydrofuran, and the resulting solution is cooled to -78°C using a dry ice-acetone bath. To this chlorotrimer solution the previously prepared sodium salt of poly(ethylene glycol) represented by Formula 3 is gradually added in a mole ratio of 1 : 3.3 over a period of 30 minutes to 1 hour, and the resulting reaction solution is additionally stirred for 30 minutes to 1 hour. After the dry ice-acetone bath is removed, the reaction is further continued for 8 to 12 hours at room temperature.

In the final step, 3.3 to 3.9 moles of oligopeptide ester represented by Formula 5 per mole of the trimer and an excessive amount of triethylamine (6 to 12 moles) are dissolved in chloroform, which was added to the reaction mixture of the previous step. The resulting solution is then refluxed for 1 to 3 days to obtain the compound of Formula 1.

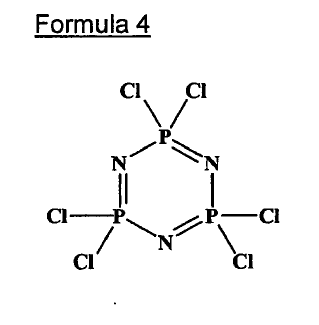

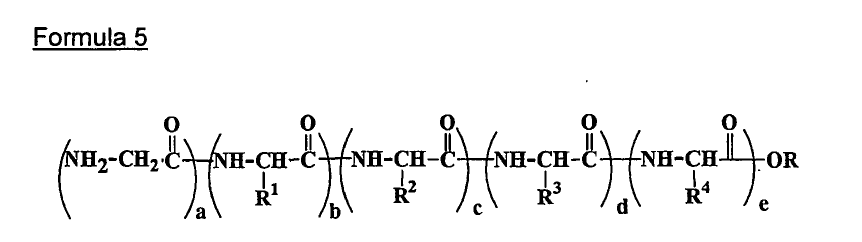

In Formulae 4 and 5, R, R¹, R², R³, R⁴, a, b, c, d and e are identical to those as defined in Formula 1, respectively. In carrying out the reactions described above, benzene, toluene, chloroform or mixtures thereof can be used as a reaction solvent.

During the above described substitution procedure, it is necessary to monitor the extent of the progress of the substitution reaction by phosphorus (³¹P) nuclear magnetic resonance spectroscopy. After the reaction is completed, the reaction solution is filtered to remove precipitates of by-products (NaCl and NEt₃·HCl), and the filtrate is concentrated under vacuum. The concentrate is then dissolved in tetrahydrofuran, and an excessive amount of ethyl ether or hexane is added to induce precipitation. This procedure is repeated at least twice to purify the product. Subsequently, thusly purified product is dissolved in a minimum amount of distilled water and placed into a dialysis membrane, thereby undergoing dialysis for 12 to 24 hours in distilled water. The dialyzed solution is freeze-dried to obtain a highly viscous cyclic phosphazene trimer with at least 60% yield. The above described reaction procedures are summarized into the following Reaction Scheme 1.

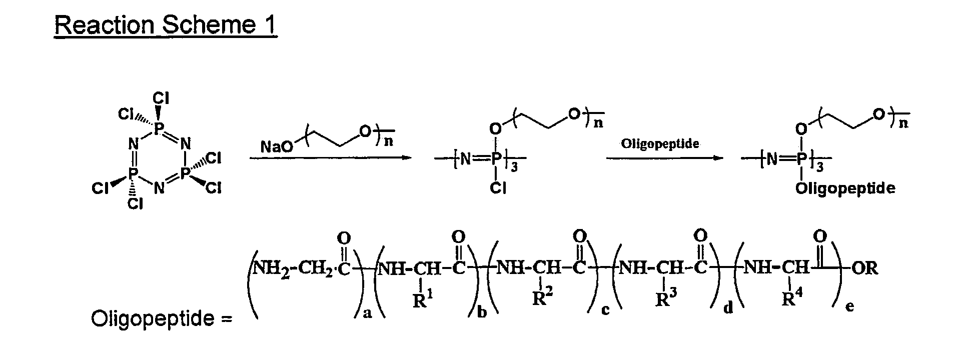

### EXAMPLES

Hereinafter, the present invention will be further illustrated in detail by the following examples, but is not limited to the examples given.

Elemental analysis of carbon, hydrogen and nitrogen for the compounds of the present invention was performed by the Perkin-Elmer C, H, N analyzer. Proton nuclear magnetic resonance (¹H NMR) spectra were obtained by Bruker DPX-250 NMR spectrometer, and phosphorus nuclear magnetic resonance (PMR) spectra were obtained by Varian Gemini-400 NMR spectrometer.

### Example 1

### Preparation of {[methoxy poly(ethylene glycol)350](glycylphenylalanyl leucylglycine ethyl ester)]}₃, [NP(MPEG350)(GlyPheLeuGlyEt)]₃

Methoxy poly(ethylene glycol) having a molecular weight of 350 (3.62g, 10.3 mmol) (MPEG350) and sodium metal (0.24g, 10.4 mmol) was dissolved in dried tetrahydrofuran, and the resulting mixture was refluxed under argon atmosphere for 24 hours to obtain the sodium salt of MPEG350. In the meantime, hexachlorocyclotriphosphazene (1.00g, 2.88 mmol) was dissolved in dried tetrahydrofuran in a separate reaction vessel, which was cooled in a dry ice-acetone bath (at -78 °C). To this chlorotrimer solution was slowly added for 30 minutes the previously prepared sodium salt of methoxy poly(ethylene glycol). After 30 minutes, the dry ice-acetone bath was removed, and then the reaction was continued at room temperature for 8 hours. To the resulting solution was added a solution (100ml) of triethylamine (2.61g, 25.80 mmol) and tetrapeptide (GlyPheLeuGly(Et)) (5.44g, 12.9 mmol) in chloroform, and then the reaction mixture was stirred at 50 °C for 12 hours. The reaction solution was filtered to remove the solid byproducts (NEt₃· HCl and NaCl), and the filtrate was concentrated under a reduced pressure. The concentrate was dissolved in tetrahydrofuran and an excessive amount of ether or hexane was added to induce precipitation. This process was repeated twice. Then, the resultant product was dissolved in a small amount of distilled water (20 ml) for dialysis for over 24 hours using the dialysis membrane (MWCO: 1000) in distilled water and then freeze-dried to obtain the phosphazene trimer, [NP(MPEG350)(GlyPheLeuGlyEt)]₃ (74% yield). The resultant product was further purified by reprecipitating from its aqueous solution (10%) at its lower critical solution temperature and then finally was freeze-dried to obtain the final product in 64% yield.
Empirical formula: C₃₆H₆₂N₅O₁₃P₁
Elemental Analysis:
Found: C, 53.23; H, 7.91; N, 8.60, Calculated: C, 53.79; H, 7.77; N, 8.71
¹H NMR spectral data (in D₂O, ppm):
δ 0.87 (d, 3H, Leu-(CH₃)₂)
δ 1.12 (t, 3H, Gly-OCH₂CH₃)
δ 1.2-1.3 (m, Leu-CHCH₂(CH₃)₂
δ 2.95 (dd, 2H, Phe-CH₂)
δ 3.2 (s, 3H, MPEG350-OCH₃)
δ 3.25-3.6 (b, 30H, MPEG350-OCH₂CH₂)
δ 3.65 (d, 2H, Gly-CH₂)
δ 3.83 (d, 2H, Gly-CH₂)
δ 3.82 (m, 2H,Gly-OCH₂CH₃)
δ 4.1 (dd, 1H, Leu-CH)
δ 4.42 (t, 1H, Phe-CH)
δ 7.14 (m, 5H, Phe-arom),
Lower critical solution temperature: 36 °C
Phosphorus nuclear magnetic resonance spectral data (in D₂O, ppm): δ 22.03

### Example 2

### Preparation of {[methoxy poly(ethylene glycol)350](glycylphenylalanyl leucylaspartic ethyl ester)]}₃, [NP(MPEG350)(GlyPheLeuAspEt₂)]₃

By using MPEG350 (3.62g, 10.3 mmol), sodium metal (0.24g, 10.4 mmol), triethyleneglycol (2.61g, 25.80 mmol) and a tetrapeptide (GlyPheLeuAspEt₂) (6.56g, 12.9 mmol), the final product, N₃P₃(MPEG350)₃(GlyPheLeuAspEt₂)₃, (64% yield) was obtained by the same method as described in Example 1.
Empirical formula: C₁₂₀H₂₀₄N₁₅O₄₅P₃
Elemental Analysis:
Found: C, 53.77; H, 7.85; N, 7.86, Calculated: C, 53.98; H, 7.70; N, 7.87
¹H NMR spectral data (in D₂O, ppm):
δ 0.87 (d, 6H, Leu-(CH₃)₂)
δ 1.12 (t, 3H, Gly-OCH₂CH₃)
δ 1.2-1.3 (m, 3H, Leu-CHCH₂)
δ 2.95 (dd, 2H, Phe-CH₂)
δ 3.2 (s, 3H, MPEG350-OCH₃)
δ 3.25-3.6 (b, 30H, MPEG350-OCH₂CH₂)
δ 3.65 (d, 2H, Gly-CH₂)
δ 4.1 (dd, 1 H, Leu-CH)
δ 4.2 (d, 2H, Asp-CH₂)
δ 4.42 (t, 1 H, Phe-CH)
δ 7.14 (m, Phe-arom)
Lower critical solution temperature: 33 °C
Phosphorus Nuclear magnetic resonance spectral data (in D₂O, ppm): δ 22.03

### Example 3

### Preparation of {[methoxy poly(ethylene glycol)350](glycylphenylalanyl leucylglutamic ethyl ester)]}₃, [NP(MPEG350)(GlyPheLeuGluEt₂)]₃

By using MPEG350 (3.62g, 10.3 mmol), sodium metal (0.24g, 10.4 mmol), triethylamine (2.61g, 25.80 mmol) and a tetrapeptide (GlyPheLeuGluEt₂) (6.73g, 12.9 mmol), the final product, N₃P₃(MPEG350)₃(GlyPheLeuGluEt₂)₃, (67% yield) was obtained by the same method as described in Example 1.
Empirical formula: C₁₂₃H₂₁₀N₁₅O₄₅P₃
Elemental Analysis:
Found: C, 54.51; H, 7.94; N, 7.82, Calculated: C, 54.47; H, 7.80; N, 7.75
¹H NMR spectral data (D₂O, ppm):
δ 0.87 (d, 6H,Leu-(CH₃)₂)
δ 1.11-1.21 (t, 3H, Glu-OCH₂CH₃)
δ 1.2-1.3 (m, 3H, Leu-CH₃)
δ 1.8-2.0 (m, 1H, Glu-NHCHCOOCH₂CH₂ C OO-)
δ 2.0-2.2 (m, 1 H, Glu-CH₂)
δ 2.38 (t, 2H, Glu-CH₂)
δ 2.95 (dd, 2H, Phe-CH₂)
δ 3.20 (s, 3H, MPEG350-OCH₃)
δ 3.25-3.6 (b, 30H,MPEG350-OCH₂CH₂)
δ 3.65 (d, 2H, Gly-CH₂)
δ 4.00-4.11 (m, 2H,Glu-CH₂)
δ 4.17 (m, 1H, Leu-CH)
δ 4.41 (dd, 1H, Glu-CH)
δ 4.41-4.50 (m, 1 H, Leu-CH)
δ 4.7 (m, 1H, Phe-CH)
δ 7.14 (m, 5H, Phe-arom)
Lower critical solution temperature: 31 °C
Phosphorus Nuclear magnetic resonance spectral data (in D₂O, ppm): δ 22.03

### Example 4

### Preparation of {[methoxy poly(ethylene glycol)550](glycylphenylalanyl leucylaspartic ethyl ester)]}₃, [NP(MPEG550)(GlyPheLeuAspEt₂)]₃

By using MPEG550 (5.67g, 10.3 mmol), sodium metal (0.24g, 10.4 mmol), triethylamine (2.61g, 25.80 mmol) and a tetrapeptide (GlyPheLeuAspEt₂) (6.56g, 12.9 mmol), the final product, N₃P₃(MPEG550)₃(GlyPheLeuAspEt₂)₃, (61% yield) was obtained by the same method as described in Example 1.
Empirical formula: C₁₅₀H₂₃₇N₁₅O₄₈P₃
Elemental Analysis:
Found: C, 57.26; H, 7.57; N, 7.66, Calculated: C, 57.13; H, 7.58; N, 7.99
¹H NMR spectral data (in D₂O, ppm):
δ 0.87 (d, 6H, Leu-(CH₃)₂)
δ 1.12 (t, 6H, Asp-OCH₂CH₃)
δ 1.47-1.80 (m, 3H, Leu-CHCH₂)
δ 2.95 (dd, 2H, Phe-CH₂)
δ 3.20 (s, 3H, MPEG50-OCH₃)
δ 3.25-3.6 (b, 48H, MPEG550-OCH₂CH₂)
δ 3.82 (m, 2H, Gly-OCH₂CH₃)
δ 4.12-4.21 (m, 4H, Asp-OCH₂CH₃)
δ 4.41-4.50 (m, 1H, Leu-CH)
δ 4.53 (m, 1H, Phe-CH)
δ 4.8-4.9 (m, 1H, Asp-CH)
δ 7.14 -7.29(m, 5H, Phe-arom)
Lower critical solution temperature: 53°C
Phosphorus Nuclear magnetic resonance spectral data (in D₂O, ppm): δ 22.03

### Example 5

### Preparation of [(methoxy poly(ethylene glycol)550) (glycylphenylalanylleucylphenylalanylglutamic diethyl easter)]₃, [NP(MPEG550) (GlyPheLeuPheGluEt₂)]₃

By using MPEG550 (5.67g, 10.3 mmol), sodium metal (0.24g, 10.4 mmol), triethylamine (2.61g, 25.80 mmol) and a pentapeptide (GlyPheLeuPheGluEt₂) (8.28g, 12.9 mmol), the final product, N₃P₃(MPEG550)₃(GLyPheLeuPheGlu(Et))₃, (62% yield) was obtained by the same method as described in Example 1.
Empirical formula: C₁₂₀H₂₉₇N₁₈O₆₃P₃
Elemental Analysis:
Found: C, 57,32; H, 8.02; N, 6.50, Calculated: C, 56.68; H, 7.85; N, 6.61
¹H NMR spectral data (in D₂O, ppm):
δ 0.76-0.90 (d, 6H, Leu-(CH₃)₂
δ 1.11-1.21 (t, 3H, Glu-OCH₂CH₃)
δ 1.8-2.0 (m, 1 H, Glu-CH₂)
δ 2.0-2.2 (m, 1H, Glu-CH₂)
δ 2.38 (t, 2H, Glu-CH₂)
δ 2.95 (dd, 2H, Phe-CH₂)
δ 3.20 (s, 3H, MPEG350-OCH₃)
δ 3.25-3.6 (b, 48H, MPEG550-OCH₂CH₂)
δ 3.65 (d, 2H, Gly-CH₂)
δ 4.00-4.11 (m, 2H,Glu-CH₂)
δ 4.17 (m, 1H, Leu-CH)
δ 4.41 (dd, 1H, Glu-CH)
δ 4.41-4.50 (m, 1H, Leu-CH)
δ 4.68 (m, 1H, Phe-CH)
δ 4.82(m, 1 H, Phe-CH)
δ 7.14 (m, 5H, Phe-arom)
Lower critical solution temperature: 35°C
Phosphorus Nuclear magnetic resonance spectral data (in D₂O, ppm): δ 22.13

### Example 6

### Preparation of [(methoxy poly(ethylene glycol)550)(glycylphenylalanyl leucylglycylglutamic diethyl ester)]₃, [NP(MPEG550)(GlyPheLeuGlyGluEt₂)]₃

By using MPEG550 (5.44g, 10.3 mmol), sodium metal (0.24g, 10.4 mmol), triethylamine (2.61g, 25.80 mmol) and a pentapeptide (GlyPheLeuGlyGluEt₂) (7.48g, 12.9 mmol), the final product, N₃P₃(MPEG550)₃(GlyPheLeuGlyGluEt₂)₃, (60% yield) was obtained by the same method as described in Example 1.
Empirical formula: C₁₅₉H₂₇₉N₁₈O₆₃P₃
Elemental Analysis:
Found: C, 54.21; H, 8.22; N, 6.98, Calculated: C, 53.89; H, 7.94; N, 7.11.
¹H NMR spectral data (in D₂O, ppm):
δ 0.87 (d, 6H, Leu-(CH₃)₂)
δ 1.11-1.21 (t, 6H, Glu-OCH₂CH₃)
δ 1.8-2.0 (m, 1H, Glu-CH₂)
δ 2.0-2.2 (m, 1H, Glu-CH₂)
δ 2.38 (t, 2H, Glu-CH₂)
δ 2.95 (dd, 2H, Phe-CH₂)
δ 3.20 (s, 3H, MPEG350-OCH₃)
δ 3.25-3.6 (b, 48H, MPEG550-OCH₂CH₂)
δ 3.65 (d, 2H, Gly-CH₂)
δ 3.85-3.98 (d, 4H, Gly-CH₂)
δ 4.00-4.11 (m, 2H,Glu-OCH₂CH₃)
δ 4.17 (m, 1H, Leu-CH)
δ 4.41 (dd, 1 H, Glu-CH)
δ 4.68 (m, 1H, Phe-CH)
δ 7.14 (m, 5H, Phe-arom)
Lower critical solution temperature: 42°C
Phosphorus Nuclear magnetic resonance spectral data (in D₂O, ppm): δ 22.03

### Example 7

### Preparation of [(methoxy poly(ethylene glycol)750) (glycylphenyl alanylleucylphenylalanylglutamic diethyl ester)]₃, [NP(MPEG750) (GlyPhe-LeuPheGluEt₂)]₃

By using MPEG750 (7.74g, 10.3 mmol), sodium metal (0.24g, 10.4 mmol), triethylamine (2.61g, 25.80 mmol) and a pentapeptide (GlyPheLeuPheGluEt₂) (8.28g, 12.94 mmol), the final product, N₃P₃(MPEG750)₃(GlyPheLeuPheGluEt₂)₃, (58% yield) was obtained by the same method as described in Example 1.
Empirical formula: C₂₀₄H₃₄₅N₁₈O₇₅P₃
Elemental Analysis:
Found: C, 55.92; H, 7.90; N, 5.51, Calculated: C, 56.42; H, 8.01; N, 5.81
¹H NMR spectral data (in D₂O, ppm):
δ 0.80-1.0 (d, 6H, Leu-CH₃)
δ 1.11-1.21 (t, 3H, Glu-OCH₂CH₃)
δ 1.2-1.3 (m, 3H, Leu-CHCH₂
δ 1.8-2.0 (m, 1H, Glu-CH₂)
δ 2.0-2.2 (m, 1H, Glu-CH₂)
δ 2.38 (t, 2H, Glu-CH₂)
δ 2.95 (dd, 2H, Phe-CH₂)
δ 3.20 (s, 3H, MPEG750-OCH₃)
δ 3.25-3.6 (b, 64H, MPEG750-OCH₂CH₂)
δ 3.65 (d, 4H, Gly-CH₂)
δ 4.00-4.11(m, 2H,Glu-CH₂)
δ 4.17 (m, 1H, Leu-CH)
δ 4.41 (dd, 1 H, Glu-CH)
δ 4.41-4.50 (m, 1H, Leu-CH)
δ 4.68 (m, 1H, Phe-CH)
δ 4.82(m, 1 H, Phe-CH)
δ 7.14 (m, 5H, Phe-arom)
Lower critical solution temperature: 45°C
Phosphorus Nuclear magnetic resonance spectral data (in D₂O, ppm): δ
22.03

### Example 8

### Measurement of Molecular Size and Verifying Incorporation of Lipophilic Drug

Whether or not the amphiphilic phosphazene trimers of the present invention are self-assembled to form micelles was determined using dynamic light scattering (DLS) method as described below.

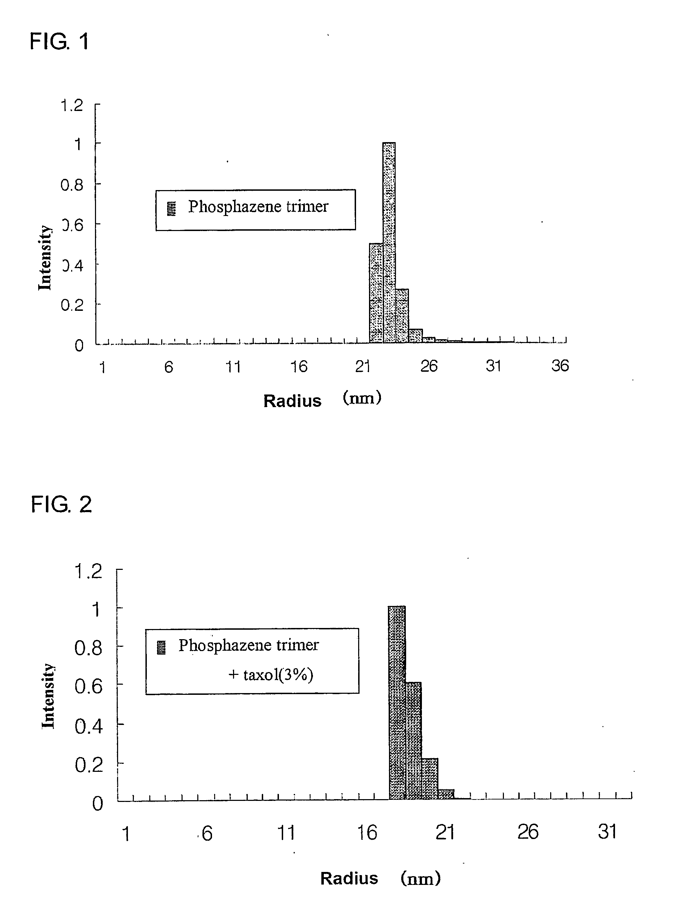

The particle size of the trimer of Example 2 in aqueous solution was measured using its aqueous solutions containing 0.1 to 0.5% polymer only (Figure 1) and the same polymer solutions containing Taxol (3 wt % of the trimer) (Figure 2). As shown in the figures, the micellar diameters are in the range of 30 ∼ 50 nm, and Figure 2 shows that the hydrophobic Taxol can be efficiently entrapped within the hydrophobic oligopeptide core of the micelle by strong hydrophobic Interaction.

Although the lower critical solution temperature of the polymer was not observed at lower concentration than 0.2 %, it was found that the micelles formed exhibit relatively uniform size of about 50 nm in diameter. However, It was confirmed by UV spectrum that the lower critical solution temperature (LCST) was observed for the polymer solutions at 0.2 % or higher polymer concentration. When the particle size of such concentrated polymer solution was measured using DLS method, contrary to the dilute polymer solution, the phosphazene trimer was found to form a secondary structure of a large aggregate having a uniform diameter of 200 ± 10 nm. Thus, it is believed that the micelles of the phosphazene trimer formed are stable at a lower temperature than LCST but they aggregate to form a secondary structure probably due to weakening of the hydrogen bonding between the outer hydrophilic PEGs of the micelle and water molecules.

It could be confirmed from such results that the phosphazene trimers of the present invention form micelles at a low concentration (0.1%) without LCST, but at a higher concentration (0.2% or higher) these micelles aggregate to form microparticles or nanoparticles at around LCST. Furthermore, it was found that hydrophobic drugs can be efficiently entrapped within the core of the micelle.

### Example 9

### In vitro Drug Releasing Profile of thePhosphazene trimers

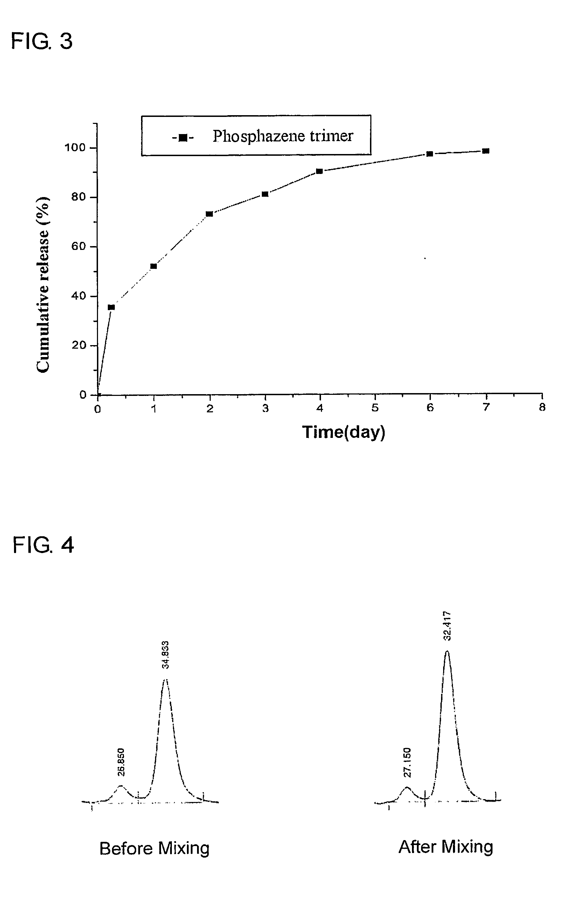

The drug-releasing experiment of a phosphazene trimer of the present invention containing human growth hormone (hGH) was performed in vitro, and the results are shown in Figure 3.

To 12.5% aqueous solution of the present phosphazene trimer of Example 3 was added hGH at a concentration of 1 mg/ml, and then the drug solution was heated to 37°C to precipitate the hGH-entrapped trimer, which exhibited high entrapment efficiency (>95%). The drug-containing trimer precipitate was dissolved in Dulbecco's phosphate buffered saline (DPBS) solution, and then the released amounts of hGH from the DPBS-solution were measured using size exclusion high performance liquid chromatography (SEC-HPLC). The results are shown in Figure 3, which shows that the initial burst effect (30.8%) was not so high and the drug was controlled-releasing during a period of 7 days with the total amount of cumulative release of 100 % over a period of 7 days. Therefore, it was found that the phosphazene trimer of Example 3 shows drug-releasing behavior suitable for a one-week drug formulation.

### Example 10

### Biocompatibility Test Using New Zealand Rabits for the Phosphazene Trimer

A phosphazene trimer and a protein drug (human growth hormone, hGH) were combined, and the stability of the drug and its local inflammation were tested.

The protein drug (7.5 mg/ml) was added to the 12.5% aqueous solution of the trimer of Example 3, and whether or not there is any interaction between the drug and the trimer was determined using reversed phase high performance liquid chromatography (RP-HPLC). Comparing the chromatograms in Figure 4 measured before and after the trimer and drug were mixed, it is shown that the trimer of the present invention does not affect the stability of the drug.

Moreover, 1 ml of the trimer solutions with the drug (+hGH) and without the drug (-hGH) were respectively administered via subcutaneous injection to the shoulders of rabbits, and any inflammation on the skin and muscle was examined. The results of such observations summarized in Table 1 showed no skin reaction (e.g. hemorrhage, edema, necrosis, etc.), and according to the autopsy opinion, no changes (color change, adhesion, spot, etc.) related to the inflammation were observed. Therefore, the phosphazene trimer of the present invention does not have local inflammation and was identified to have biocompatibility.

**Table 1**

| Number of Days | Classification | Symptoms and Skin Reactions | Autopsy Opinion | | Remarks |
|---|---|---|---|---|---|
| | | | Muscle | Skin | |
| 3 | T1(-hGH) | - | Sample was slightly distributed | - | No difference whether or not the drug was contained in the sample |
| | T2(+hGH) | - | Sample was slightly distributed | - | |
| 7 | T1(-hGH) | - | Sample was slightly distributed | - | |
| | T2(+hGH) | - | Sample was slightly distributed | - | |

According to the present invention, a new class of biocompatible cyclic phosphazene trimers, in which poly(ethylene glycols) as a hydrophilic group and oligopeptide esters that have a stronger and broader hydrophobicity than amino acids as a hydrophobic group were introduced, thereby affording amphiphilicity and thermosensitivity of the trimers to form thermosensitive micells in aqueous solution, and a preparation method thereof are provided for a new drug delivery system.

## Claims

1. A cyclic phosphazene trimer represented by the following Formula 1: 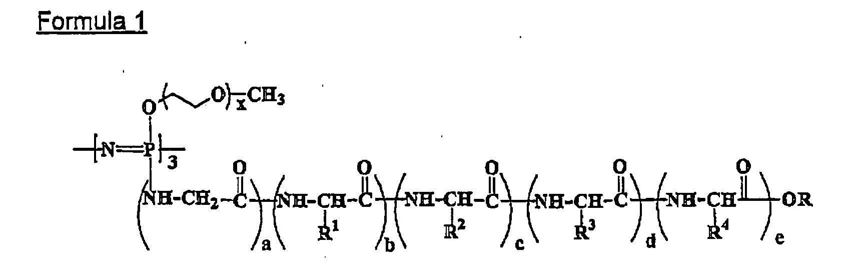 wherein x Is an integer of 3, 4, 7, 12 or 16; R is methyl, ethyl or benzyl group; R¹ is selected from the group consisting of CH₂CH(CH₃)₂, CH₂C₆H₅, CH(CH₃)CH₂CH₃ and CH₃; R² is selected from the group consisting of CH₂COOR, CH₂CH₂COOR, CH₂CH(CH₃)₂ and CH(CH₃)CH₂CH₃; R³ and R⁴ are independently selected from the group consisting of CH₂COOR, CH₂CH₂COOR and H, wherein said R is the same as defined above; a, b, c and d are equal to 1, respectively; and e is 0 or 1.

2. A method for preparing a cyclic phosphazene trimer represented by Formula 1, comprising the consecutive steps of:
(1) reacting a sodium salt of poly(ethylene glycol) represented by Formula 3 with hexachlorocyclotriphosphazene represented by Formula 4; and
(2) reacting the resultant product from step (1) with an oligopeptide ester represented by Formula 5. 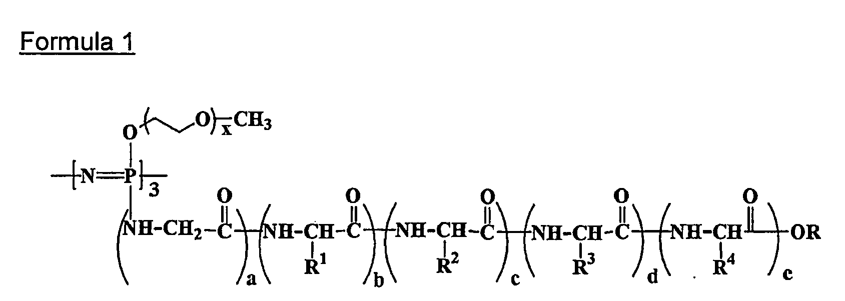 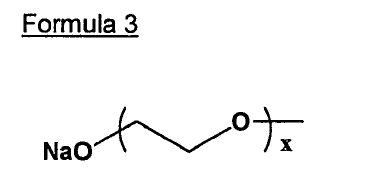 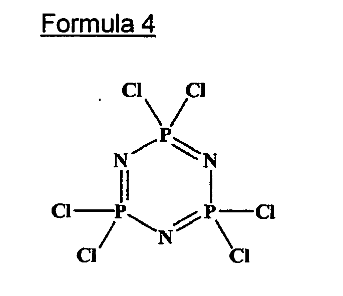 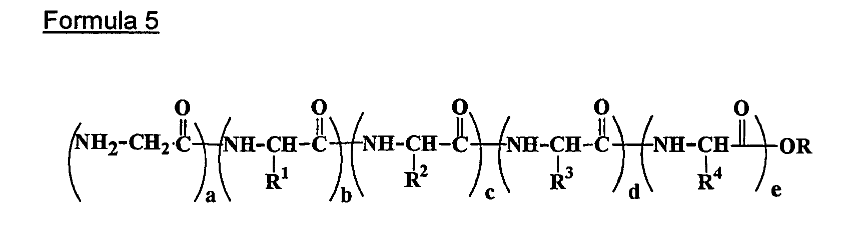 wherein x is an integer of 3, 4, 7, 12 or 16; R is methyl, ethyl or benzyl group; R¹ is selected from the group consisting of CH₂CH(CH₃)₂, CH₂C₆H₅, CH(CH₃)CH₂CH₃ and CH₃; R² is selected from the group consisting of CH₂COOR, CH₂CH₂COOR, CH₂CH(CH₃)₂ and CH(CH₃)CH₂CH₃; R³ and R⁴ are independently selected from the group consisting of CH₂COOR, CH₂CH₂COOR and H, wherein said R is the same as defined above; a, b, c and d are equal to 1, respectively; and e is 0 or 1.

3. The method according to claim 2, wherein step (2) is carried out in the presence of triethylamine.

4. The method according to claim 2, wherein in steps (1) and (2), a solvent is selected from the group consisting of tetrahydrofuran, benzene, toluene, chloroform and mixtures thereof.

5. The method according to claim 2, wherein in step (1), 3.0 - 3.3 moles of the sodium salt of poly(ethylene glycol) are used per 1 mole of hexachlorocyclotriphosphazene.

6. The method according to claim 2, wherein in step (2), 3.3 - 3.9 moles of oligopeptide ester are used per 1 mole of hexachlorocyclotriphosphazene from step (1).

7. The method according to claim 3, wherein 6 - 12 moles of triethylamine are used per 1 mole of hexachlorocyclotriphosphazene from step (1).

8. The method according to claim 2, wherein subsequent to step (2), further comprising the steps of:
(a) filtering the reaction mixture;
(b) concentrating the filtrate obtained in step (a);
(c) redissolving the concentrate obtained in step (b) in tetrahydrofuran;
(d) inducing precipitation by adding ethyl ether or hexane to the solution obtained from step (c);
(e) filtering the precipitate obtained in step (d); and
(f) dialyzing the filtered precipitate in distilled water, thereby obtaining purified cyclic phosphazene trimer.

## Patentansprüche

1. Ein cyclisches Phosphazen Trimer, wiedergegeben mit der folgenden Formel 1: 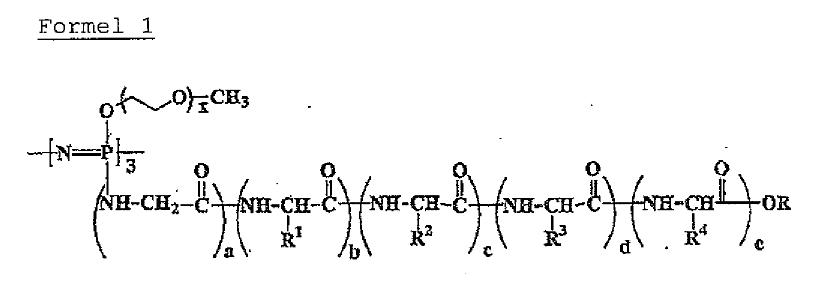 wobei x eine ganze Zahl von 3, 4, 7, 12 oder 16 ist; R eine Methyl-, Ethyl- oder Benzylgruppe ist; R¹ aus gewählt ist aus der Gruppe bestehend aus CH₂CH(CH₃)₂, CH₂C₆H₅, CH(CH₃)CH₂CH₃ und CH₃; R² ausgewählt ist aus der Gruppe bestehend aus CH₂COOR, CH₂CH₂COOR, CH₂CH(CH₃)₂ und CH(CH₃)CH₂CH₃; R³ und R⁴ unabhängig voneinander ausgewählt sind aus der Gruppe bestehend aus CH₂COOR, CH₂CH₂COOR und H, wobei das R dem oben definierten R entspricht; a, b, c und d jeweils gleich 1 sind; und e 0 oder 1 ist.

2. Verfahren zur Herstellung eines cyclischen Phosphazen Trimers, wiedergegebenen mit der Formel 1, umfassend die aufeinander folgenden Schritte:
(1) Umsetzung eines Natriumsalzes von Polyethylenglykol, wiedergegeben mit der Formel 3, mit Hexachlorcyclotriphosphazen, wiedergegeben mit der Formel 4; und
(2) Umsetzung des aus Schritt (1) resultierenden Produktes mit einem Oligopeptidester, wiedergegeben mit der Formel 5. 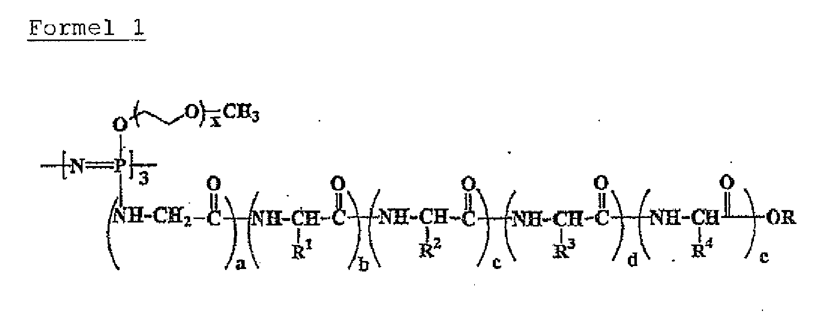 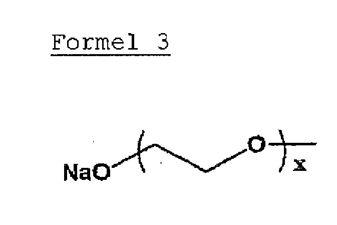 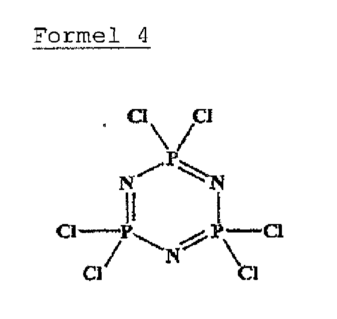 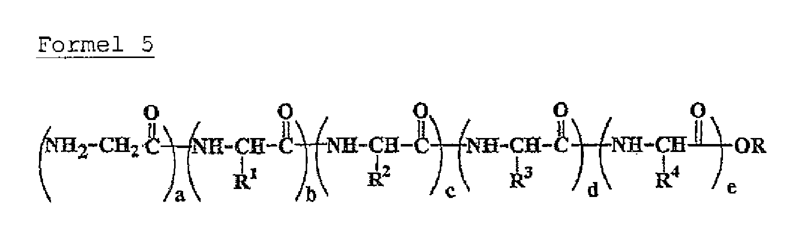
wobei x eine ganze Zahl von 3, 4, 7, 12 oder 16 ist; R eine Methyl-, Ethyl- oder Benzylgruppe ist; R¹ aus gewählt ist aus der Gruppe bestehend aus CH₂CH(CH₃)₂, CH₂C₆H₅, CH(CH₃)CH₂CH₃ und CH₃; R² ausgewählt ist aus der Gruppe bestehend aus CH₂COOR, CH₂CH₂COOR, CH₂CH(CH₃)₂ und CH(CH₃)CH₂CH₃; R³ und R⁴ unabhängig voneinander ausgewählt sind aus der Gruppe bestehend aus CH₂COOR, CH₂CH₂COOR und H, wobei das R dem oben definierten R entspricht; a, b, c und d jeweils gleich 1 sind; und e 0 oder 1 ist.

3. Verfahren nach Anspruch 2, wobei Schritt (2) in Gegenwart von Triethylamin durchgeführt wird.

4. Verfahren nach Anspruch 2, wobei für die Schritte (1) und (2) ein Lösungsmittel ausgewählt wird aus der Gruppe bestehend aus Tetrahydrofuran, Benzol, Toluol, Chloroform oder Mischungen davon.

5. Verfahren nach Anspruch 2, wobei in Schritt (1) 3.0 - 3.3 Mol des Natriumsalzes von Polyethylenglykol pro 1 Mol Hexachlorcyclotriphosphazen eingesetzt werden.

6. Verfahren nach Anspruch 2, wobei in Schritt (2) 3.3 - 3.9 Mol Oligopeptidester pro 1 Mol Hexachlorcyclotriphosphazen aus Schritt (1) eingesetzt werden.

7. Verfahren nach Anspruch 3, wobei 6 - 12 Mol Triethylamin pro 1 Mol Hexachlorcyclotriphosphazen aus Schritt (1) eingesetzt werden.

8. Verfahren nach Anspruch 2, wobei das Verfahren nachfolgend auf Schritt (2) die weiteren Schritte umfasst :
(a) Filtrieren der Reaktionsmischung;
(b) Konzentrieren des in Schritt (a) erhaltenen Filtrats:
(c) Wiederauflösen des in Schritt (b) erhaltenen Konzentrats in Tetrahydrofuran;
(d) Einleiten der Ausfällung durch Zugabe von Ethylether oder Hexan zu der in Schritt (c) erhaltenen Lösung;
(e) Filtrieren des in Schritt (d) erhaltenen Niederschlags; und
(f) Dialysieren des filtrierten Niederschlags in destilliertem Wasser, wobei ein gereinigtes cyclisches Phosphazen Trimer erhalten wird.

## Revendications

1. Trimère de phosphazène cyclique représenté par la formule 1 suivante : 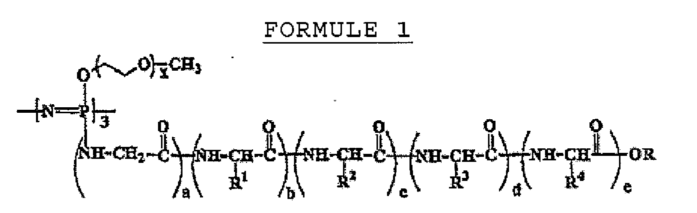 dans laquelle x est un nombre entier égal à 3, 4, 7, 12 ou 16 ; R est un groupe méthyle, éthyle ou benzyle ; R¹ est choisi dans le groupe constitué par CH₂CH(CH₃)₂, CH₂C₆H₅, CH(CH₃)CH₂CH₃ et CH₃ ; R² est choisi dans le groupe constitué par CH₂COOR, CH₂CH₂COOR, CH₂CH(CH₃)₂ et CH(CH₃)CH₂CH₃ ; R³ et R⁴ sont indépendamment choisis dans le groupe constitué par CH₂COOR, CH₂CH₂COOR et H, dans lesquels ledit R a la même définition que ci-dessus ; a, b, c et d sont respectivement égaux à 1 ; et e est 0 ou 1.

2. Méthode de préparation d'un trimère de phosphazène cyclique représenté par la formule 1, comprenant les étapes consécutives suivantes :
(1) la réaction d'un sel de sodium de poly-(éthylène glycol) représenté par la formule 3 avec l'hexachlorocyclotriphosphazène représenté par la formule 4 ; et
(2) la réaction du produit résultant obtenu dans l'étape (1) avec un ester d'oligopeptide représenté par la formule 5, 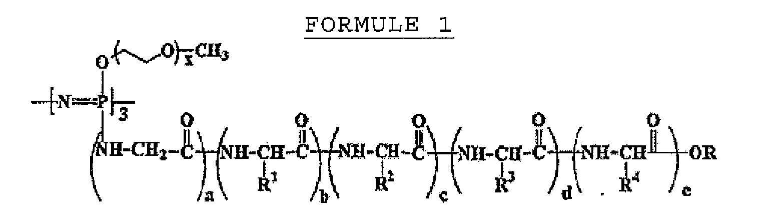 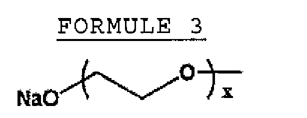 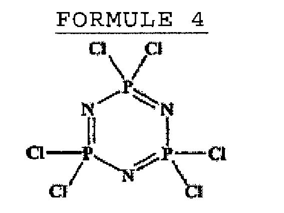 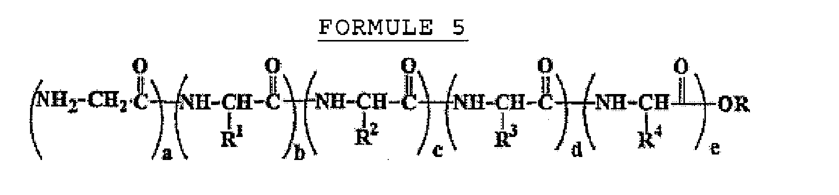
dans lesquelles x est un nombre entier égal à 3, 4, 7, 12 ou 16 ; R est un groupe méthyle, éthyle ou benzyle ; R¹ est choisi dans le groupe constitué par CH₂CH(CH₃)₂, CH₂C₆H₅, CH(CH₃)CH₂CH₃ et CH₃ ; R² est choisi dans le groupe constitué par CH₂COOR, CH₂CH₂COOR, CH₂CH(CH₃)₂ et CH(CH₃)CH₂CH₃ ; R³ et R⁴ sont indépendamment choisis dans le groupe constitué par CH₂COOR, CH₂CH₂COOR et H, dans lesquels ledit R a la même définition que ci-dessus ; a, b, c et d sont respectivement égaux à 1 ; et e est 0 ou 1.

3. Méthode selon la revendication 2, dans laquelle ladite étape (2) est réalisée en présence de triéthylamine.

4. Méthode selon la revendication 2, dans laquelle, dans les étapes (1) et (2), un solvant est choisi dans le groupe constitué par le tétrahydrofuranne, le benzène, le toluène, le chloroforme et leurs mélanges.

5. Méthode selon la revendication 2, dans laquelle, dans l'étape (1), 3,0 à 3,3 moles du sel de sodium de poly(éthylène glycol) sont utilisées pour 1 mole d'hexachlorocyclotriphosphazène.

6. Méthode selon la revendication 2, dans laquelle, dans l'étape (2), 3,3 à 3,9 moles d'ester d'oligopeptide sont utilisées pour 1 mole d'hexachloro-cyclotriphosphazène obtenu dans l'étape (1).

7. Méthode selon la revendication 3, dans laquelle 6 à 12 moles de triéthylamine sont utilisées pour 1 mole d'hexachlorocyclotriphosphazène obtenu dans l'étape (1).

8. Méthode selon la revendication 2, comprenant en outre les étapes suivantes après l'étape (2) :
(a) la filtration du mélange réactionnel ;
(b) la concentration du filtrat obtenu dans l'étape (a) ;
(c) la redissolution du concentré obtenu dans l'étape (b) dans du tétrahydrofuranne ;
(d) l'induction d'une précipitation en ajoutant de l'éther éthylique ou de l'hexane à la solution obtenue dans l'étape (c) ;
(e) la filtration du précipité obtenu dans l'étape (d) ; et
(f) la dialyse du précipité filtré dans de l'eau distillée, pour ainsi obtenir un trimère de phosphazène cyclique purifié.
